# EUROPÄISCHE PATENTSCHRIFT

(11) **EP 2 611 859 B1**
(45) Veröffentlichungstag und Bekanntmachung des Hinweises auf die Patenterteilung: **24.12.2014**
(21) Anmeldenummer: 11757579.5
(22) Anmeldetag: 02.09.2011
(51) Int. Cl.: C08K 9/06

(54) **HYDROPHOBE, FUNKTIONALISIERTE PARTIKEL**
HYDROPHOBIC, FUNCTIONALIZED PARTICLES
PARTICULES HYDROPHOBES FONCTIONNALISÉES

(30) Priorität: 03.09.2010 EP 10175238
(43) Veröffentlichungstag der Anmeldung: 10.07.2013
(73) Patentinhaber: BASF SE, 67056 Ludwigshafen (DE)
(72) Erfinder: DEUERLEIN, Stephan, 67061 Ludwigshafen (DE); DOMKE, Imme, 68165 Mannheim (DE); MICHAILOVSKI, Alexej, 67061 Ludwigshafen (DE); RIEGER, Reinhold, 67591 Offstein (DE); CHAROENSIRISOMBOON, Piyada, 68165 Mannheim (DE); EICHHOLZ, Christian, 68165 Mannheim (DE); BAYER, Robert, 74889 Sinsheim (DE)
(86) Internationale Anmeldenummer: PCT/EP2011/065162
(87) Internationale Veröffentlichungsnummer: WO 2012/028701

(56) Entgegenhaltungen:
- WO-A1-03/058649
- WO-A1-2009/059382

## Beschreibung

Die vorliegende Erfindung betrifft eine stabile Mischung enthaltend an der Oberfläche modifizierte Partikel, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung, ausgewählt aus Silizium-enthaltenden Verbindungen, die eine, zwei oder drei Alkoxyreste tragen, und wenigstens ein Lösungsmittel, wenigstens eine oberflächenaktive Substanz oder eine Mischung davon, die Verwendung dieser Partikel in Systemen, in denen diese mit mindestens einem Lösungsmittel in Kontakt gebracht werden, wobei das Massenverhältnis von Lösungsmittel zu modifiziertem Partikel größer als 500 ist, sowie die Verwendung dieser Partikel in Agglomerations-Deagglomerations-Zyklen.

Metall- und/oder Halbmetalloxidpartikel, welche an der Oberfläche mit Silizium-enthaltenden Verbindungen funktionalisiert sind, sind aus dem Stand der Technik bereits bekannt.

WO 2009/059382 A1 offenbart beispielsweise eine hydrophobe Modifikation von mineralischen Füllstoffen und gemischte Polymersysteme. Gemäß diesem Dokument erfolgt die hydrophobe Modifizierung durch Reaktion der entsprechenden mineralischen Partikel mit Silanen, beispielsweise C₃-C₁₂-Alkyl-Trialkoxy-Silanen. Dass die entsprechend hydrophob modifizierten Partikel gemäß WO 2009/059382 A1 besonders stabil in großen Mengen Lösungsmitteln, gegebenenfalls in Gegenwart von oberflächenaktiven Substanzen sind, wird in diesem Dokument nicht offenbart.

WO 03/058649 A1 offenbart Magnetpartikel, die an der Oberfläche mit Siliziumdioxid umhüllt sind. Dies erfolgt, indem entsprechende magnetische Partikel mit einer Wasserglas-Lösung behandelt werden.

Aufgabe der vorliegenden Erfindung gegenüber dem Stand der Technik ist es somit, an der Oberfläche hydrophobierte Partikel bereitzustellen, welche sich durch eine besonders hohe Stabilität gegenüber großen Mengen Lösungsmitteln und/oder oberflächenaktiven Substanzen auszeichnen.

Diese Aufgabe wird gelöst durch eine stabile Mischung enthaltend an der Oberfläche modifizierte Partikel, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung der allgemeinen Formel (I)

R¹ₙ-Si(OR²)₄₋ₙ (I)

oder Polysiloxanen der allgemeinen Formel (II) 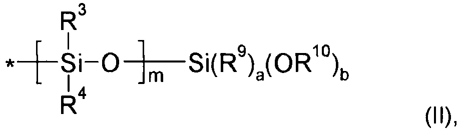 worin R¹, R², R³, R⁴, R⁹, R¹⁰, a, b, m und n die folgenden Bedeutungen haben:
- R¹, R², R⁹, R¹⁰: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
- R³: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₂₀-Alkenyl, lineares oder verzweigtes, gegebenenfalls funktionalisiertes C₂-C₂₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl, -OR¹⁷, Einheit der allgemeinen Formel 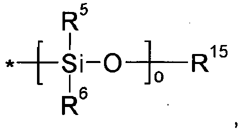
- R⁴: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₂₀-Alkenyl, lineares oder verzweigtes, gegebenenfalls funktionalisiertes C₂-C₂₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl, -OR¹⁸, Einheit der allgemeinen Formel 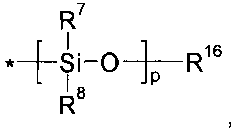
- R⁵, R⁶, R⁷, R⁸,: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
- R¹⁵: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl, oder Einheit der allgemeinen Formel 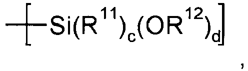
- R¹⁶: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl, oder Einheit der allgemeinen Formel 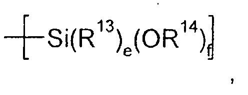
- R¹¹, R¹², R¹³, R¹⁴, R¹⁷, R¹⁸: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
- n: 1, 2 oder 3,
- a, c, e: unabhängig voneinander 0, 1 oder 2, bevorzugt 0,
- b: 3-a,
- d: 3-c,
- f: 3-e und
- m, o, p: unabhängig voneinander 1 bis 500, bevorzugt 1 bis 50, besonders bevorzugt 1 bis 20,
und wenigstens ein Lösungsmittel, wenigstens eine oberflächenaktive Substanz oder eine Mischung davon.

Erfindungsgemäß werden unter Polysiloxanen der allgemeinen Formel (II) solche verstanden, die Einheiten der allgemeinen Formel (II) enthalten. Die Bindung erfolgt dabei bevorzugt über die mit * gekennzeichnete Bindung bzw. über eine freie Bindung am Si-Atom.

Die vorliegende Erfindung betrifft auch eine stabile Mischung enthaltend an der Oberfläche modifizierte Partikel, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung der allgemeinen Formel (I)

R¹ₙ-Si(OR²)₄₋ₙ (I)

worin R¹, R² und n die folgenden Bedeutungen haben:
- R¹: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
- R²: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₂₀-Alkenyl, lineares oder verzweigtes, gegebenenfalls funktionalisiertes C₂-C₂₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
und/oder
Gruppe der allgemeinen Formel (IIa)

-SiR¹ₘ(OR²)₃₋ₘ (IIa)

wobei R¹ und R² unabhängig voneinander die oben genannten Bedeutungen haben und m unabhängig voneinander 0, 1, 2 oder 3 bedeuten kann,
- n: 1, 2 oder 3,
und wenigstens ein Lösungsmittel, wenigstens eine oberflächenaktive Substanz oder eine Mischung davon.

Hat R² in der Verbindung der allgemeinen Formel (I) mehrmals, beispielsweise mehr als einmal, die Bedeutung einer Gruppe der allgemeinen Formel (IIa), so liegen entsprechende Verbindungen vor, die zwei, drei, vier oder mehr Einheiten mit Si-Atomen tragen. Daher liegen für den Fall, dass in der allgemeinen Formel (I) R² mehrmals eine Gruppe der allgemeinen Formel (IIa) bedeutet, Polysiloxane vor, die im Allgemeinen der allgemeinen Formel (II) entsprechen.

Des Weiteren wird die Aufgabe gelöst durch die Verwendung der erfindungsgemäßen, an der Oberfläche modifizierten Partikel in Systemen, in denen die modifizierten Partikel mit mindestens einem Lösungsmittel in Kontakt gebracht werden, wobei das Massenverhältnis von Lösungsmittel zu modifiziertem Partikel größer als 500 ist.

Die erfindungsgemäße Aufgabe wird auch gelöst durch die Verwendung von an der Oberfläche modifizierten, erfindungsgemäßen Partikeln in Agglomerations-Deagglomerations-Zyklen.

Die erfindungsgemäße stabile Mischung enthält an der Oberfläche modifizierte Partikel, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung der allgemeinen Formel (I), einem Polysiloxan der allgemeinen Formel (II) oder einer Verbindung der allgemeinen Formel (I), enthaltend Gruppen der allgemeinen Formel (IIa), die bevorzugt ebenfalls Polysiloxane darstellen.

In einer besonders bevorzugten Ausführungsform betrifft die vorliegende Erfindung die erfindungsgemäße Mischung, wobei die Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, magnetisch sind.

Ganz besonders bevorzugte Metalloxide sind Eisenoxide, beispielsweise Fe₂O₃, magnetische Eisenoxide, beispielsweise Magnetit, Maghemit, Hämatit, kubischen Ferriten der allgemeinen Formel (III)

M²⁺ₓFe²⁺₁₋ₓFe³⁺₂O₄ (III)

mit
- M: ausgewählt aus Co, Ni, Mn, Zn und Mischungen davon und
- x: ≤ 1,
hexagonalen Ferriten, beispielsweise Calcium-, Barium- oder Strontiumferrit MFe₆O₁₉ mit M = Ca, Sr, Ba, und Kombinationen davon.

In einer bevorzugten Ausführungsform ist das erfindungsgemäß eingesetzte Metalloxid ein magnetisches Eisenoxid ausgewählt aus der oben genannten Gruppe. In einer ganz besonders bevorzugten Ausführungsform ist das wenigstens eine erfindungsgemäß eingesetzte Metalloxid Magnetit. Magnetit weist die Formel Fe₃O₄, insbesondere Fe^{II}Fe^{III}O₄, auf und ist dem Fachmann bekannt. Magnetit kann nach bekannten Verfahren hergestellt werden und ist kommerziell erhältlich.

Die erfindungsgemäß eingesetzten Metalloxidpartikel können gegebenenfalls noch weitere Dotierungsmittel, beispielsweise weitere Metalle in oxidischer oder elementarer Form enthalten, beispielsweise Edelmetalle wie Platin.

Die erfindungsgemäß vorliegenden Partikel weisen im Allgemeinen eine Teilchengröße von 50 nm bis 500 µm, bevorzugt 200 nm bis 100 µm, besonders bevorzugt 500 nm bis 10 µm, auf.

Die erfindungsgemäß vorliegenden Partikel können im Allgemeinen jedwede Form aufweisen, beispielsweise kugelförmig, zylindrisch, nadelförmig oder backsteinförmig.

In der erfindungsgemäßen, stabilen Mischung liegen an der Oberfläche modifizierte Partikel vor, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung der allgemeinen Formel (I)

R¹ₙ-Si(OR²)₄₋ₙ (I)

oder Polysiloxanen der allgemeinen Formel (II) 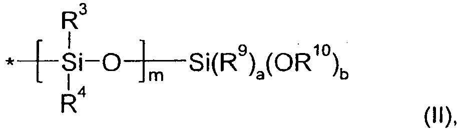 worin R¹, R², R³, R⁴, R⁹, R¹⁰, a, b, m und n die oben genannten Bedeutungen haben:

Bevorzugt is R¹ unabhängig voneinander ein lineares oder verzweigtes, gegebenenfalls funktionalisiertes C₁-C₃₀-Alkyl, besonders bevorzugt C₁-C₂₀-Alkyl, ganz besonders bevorzugt C₄-C₁₂-Alkyl. In einer bevorzugten Ausführungsform ist R¹ ein lineares oder verzweigtes, nicht funktionalisiertes C₁-C₃₀-Alkyl, besonders bevorzugt C₁-C₂₀-Alkyl, ganz besonders bevorzugt C₄-C₁₂-Alkyl. Beispiele für lineare oder verzweigte C₄-C₁₂-Alkylreste sind Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert.-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R¹ unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₄-C₁₂-Alkenyl. Beispiele für erfindungsgemäß besonders bevorzugte Alkenylreste sind Ethenyl (Vinyl), Propenyl, insbesondere n-Propenyl, isoPropenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R¹ unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₄-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Nonenyl, insbesondere n-Noninyl, iso-Noninyl, tert.-Noninyl, Decinyl, insbesondere n-Decinyl, iso-Decinyl, tert.-Decinyl, Undecinyl, insbesondere n-Undecinyl, iso-Undecinyl, tert.-Undecinyl, oder Dodecinyl, insbesondere n-Dodecinyl, iso-Dodecinyl, tert.-Dodecinyl.

Weiter bevorzugt ist R¹ unabhängig voneinander ein gegebenenfalls funktionalisiertes C₃-C₂₀-Cycloalkyl, besonders bevorzugt C₃-C₁₂-Cycloalkyl, ganz besonders bevorzugt C₃-C₆-Cycloalkyl, beispielsweise Cyclopropyl, Cyclobutyl, Cyclopentyl, Cyclohexyl.

Weiter bevorzugt ist R¹ unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R¹ unabhängig voneinander ein gegebenenfalls funktionalisiertes C₁-C₂₀-Heteroalkyl, besonders bevorzugt C₁-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R¹ unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl oder Biaryle.

Weiter bevorzugt ist R¹ unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R¹ unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R¹ unabhängig voneinander ein gegebenenfalls funktionalisiertes C₅-C₂₂-Heteroaryl, besonders bevorzugt C₅-C₁₂-Heteroaryl.

Die genannten Reste R¹ können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R¹ genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Ganz besonders bevorzugte Reste R¹ sind Octyl, besonders n-Octyl, Hexyl, besonders n-Hexyl und/oder Butyl, besonders n-Butyl, Decyl, besonders n-Decyl, oder Dodecyl, besonders n-Dodecyl.

"Unabhängig voneinander" bedeutet im Rahmen der vorliegenden Erfindung, dass, falls in der Verbindung der allgemeinen Formel (I) mehrere Reste R¹ vorliegen, diese gleich oder unterschiedlich sein können.

Bevorzugt ist R² unabhängig voneinander ein lineares oder verzweigtes, gegebenenfalls funktionalisiertes C₁-C₃₀-Alkyl, besonders bevorzugt C₁-C₂₀-Alkyl, ganz besonders bevorzugt C₁-C₁₂-Alkyl. In einer bevorzugten Ausführungsform ist R² ein lineares oder verzweigtes, nicht funktionalisiertes C₁-C₃₀-Alkyl, besonders bevorzugt C₁-C₂₀-Alkyl, ganz besonders bevorzugt C₁-C₁₂-Alkyl. Beispiele für lineare oder verzweigte C₁-C₁₂-Alkylreste sind Methyl, Ethyl, Propyl, insbesondere n-Propyl, iso-Propyl, Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert.-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R² unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₂-C₁₂-Alkenyl. Beispiele für erfindungsgemäß besonders bevorzugte Alkenylreste sind Ethenyl (Vinyl), Propenyl, insbesondere n-Propenyl, isoPropenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R² unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₂-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Noninyl, insbesondere n-Noninyl, iso-Noninyl, tert.-Noninyl, Decinyl, insbesondere n-Decinyl, iso-Decinyl, tert.-Decinyl, Undecinyl, insbesondere n-Undecinyl, iso-Undecinyl, tert.-Undecinyl, oder Dodecinyl, insbesondere n-Dodecinyl, iso-Dodecinyl, tert.-Dodecinyl.

Weiter bevorzugt ist R² unabhängig voneinander ein gegebenenfalls funktionalisiertes C₃-C₂₀-Cycloalkyl, besonders bevorzugt C₃-C₁₂-Cycloalkyl, besonders bevorzugt C₃-C₆-Cycloalkyl, beispielsweise Cyclopropyl, Cyclobutyl, Cyclopentyl, Cyclohexyl.

Weiter bevorzugt ist R² unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R² unabhängig voneinander ein gegebenenfalls funktionalisiertes C₁-C₂₀-Heteroalkyl, besonders bevorzugt C₄-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R² unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl oder Biaryle.

Weiter bevorzugt ist R² unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R² unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R² unabhängig voneinander ein gegebenenfalls funktionalisiertes C₅-C₂₂-Heterorayl, besonders bevorzugt C₅-C₁₂-Heteroaryl.

Die genannten Reste R² können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R² genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Ganz besonders bevorzugte Reste R² sind Methyl und/oder Ethyl.

Daher betrifft die vorliegende Erfindung bevorzugt die erfindungsgemäße Mischung, wobei in der Verbindung der allgemeinen Formel (I) R² Methyl oder Ethyl ist.

In einer weiteren bevorzugten Ausführungsform ist R² eine Gruppe der allgemeinen Formel (IIa)

-SiR¹ₘ(OR²)₃₋ₘ (IIa)

wobei R¹ und R² unabhängig voneinander die oben genannten Bedeutungen haben und m unabhängig voneinander 0, 1, 2 oder 3, bevorzugt 1 oder 2, bedeuten kann. Die Anbindung dieser Gruppe der allgemeinen Formel (IIa) an die Verbindung der allgemeinen Formel (I) erfolgt dabei über die freie Bindung am Si-Atom.

In einer bevorzugten Ausführungsform bedeutet R¹ in der Gruppe der allgemeinen Formel (IIa) unabhängig voneinander Octyl, besonders n-Octyl, Hexyl, bevorzugt n-Hexyl, und/oder Butyl, bevorzugt n-Butyl, Decyl, bevorzugt n-Decyl, oder Dodecyl, bevorzugt n-Dodecyl.

In einer besonders bevorzugten Ausführungsform bedeutet R² in der Gruppe der allgemeinen Formel (IIa) unabhängig voneinander Methyl oder Ethyl.

Daher betrifft die vorliegende Erfindung bevorzugt die erfindungsgemäße Mischung, wobei in der Verbindung der allgemeinen Formel (I) oder in der Gruppe der allgemeinen Formel (IIa) R² Methyl oder Ethyl ist.

Liegen in der Verbindung der allgemeinen Formel (I) wiederholt Gruppen der allgemeinen Formel (IIa) vor, so werden erfindungsgemäß Polysiloxane als Verbindungen der allgemeinen Formel (I) eingesetzt. Werden erfindungsgemäß Polysiloxane enthaltend Gruppen der allgemeinen Formel (IIa) eingesetzt, so können diese linear oder verzweigt sein. Erfindungsgemäß eingesetzte Polysiloxane enthaltend Gruppen der allgemeinen Formel (IIa) weisen im Allgemeinen ein Molekulargewicht von 250 bis 200.000 g/mol, bevorzugt 250 bis 20.000 g/mol, besonders bevorzugt 300 bis 5.000 g/mol, auf.

"Unabhängig voneinander" bedeutet im Rahmen der vorliegenden Erfindung, dass, falls in der Verbindung der allgemeinen Formel (I) mehrere Reste R² vorliegen, diese gleich oder unterschiedlich sein können.

Bevorzugt ist R³ unabhängig voneinander ein lineares oder verzweigtes, gegebenenfalls funktionalisiertes C₁-C₃₀-Alkyl, besonders bevorzugt C₁-C₂₀-Alkyl, ganz besonders bevorzugt C₁-C₁₂-Alkyl. In einer bevorzugten Ausführungsform ist R³ ein lineares oder verzweigtes, nicht funktionalisiertes C₁-C₃₀-Alkyl, besonders bevorzugt C₁-C₂₀-Alkyl, ganz besonders bevorzugt C₁-C₁₂-Alkyl. Beispiele für lineare oder verzweigte C₁-C₁₂-Alkylreste sind Methyl, Ethyl, Propyl, insbesondere n-Propyl, iso-Propyl, Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R³ unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₂-C₁₂-Alkenyl. Beispiele für erfindungsgemäß besonders bevorzugte Alkenylreste sind Ethenyl (Vinyl), Propenyl, insbesondere n-Propenyl, isoPropenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R³ unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₂-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Noninyl, insbesondere n-Noninyl, iso-Noninyl, tert.-Noniyl, Decinyl, insbesondere n-Decinyl, iso-Decinyl, tert.-Decinyl, Undecinyl, insbesondere n-Undecinyl, iso-Undecinyl, tert.-Undecinyl, oder Dodecenyl, insbesondere n-Dodecinyl, iso-Dodecinyl, tert.-Dodecinyl.

Weiter bevorzugt ist R³ unabhängig voneinander ein gegebenenfalls funktionalisiertes C₃-C₂₀-Cycloalkyl, besonders bevorzugt C₃-C₁₂-Cycloalkyl, besonders bevorzugt C₃-C₆-Cycloalkyl, beispielsweise Cyclopropyl, Cyclobutyl, Cyclopentyl, Cyclohexyl.

Weiter bevorzugt ist R³ unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R³ unabhängig voneinander ein gegebenenfalls funktionalisiertes C₁-C₂₀-Heteroalkyl, besonders bevorzugt C₁-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R³ unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl, Biaryle.

Weiter bevorzugt ist R³ unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R³ unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R³ unabhängig voneinander ein gegebenenfalls funktionalisiertes C₅-C₂₂-Heterorayl, besonders bevorzugt C₅-C₁₂-Heteroaryl.

R³ kann in einer Ausführungsform -OR¹⁷ bedeuten, wobei R¹⁷ die oben genannten Bedeutungen aufweist. Mögliche und bevorzugte Ausführungsformen für R¹⁷ entsprechen in einer möglichen Ausführungsform unabhängig voneinander den bezüglich R² genannten möglichen und bevorzugten Ausführungsformen. Ganz besonders bevorzugt ist R¹⁷ in dieser Ausführungsform ausgewählt aus Methyl, Ethyl, Hexyl, Octyl, Decyl, Dodecyl. Wenn R³ -OR¹⁷ bedeutet, werden bei der Modifizierung der Partikeloberfläche vernetzte Siloxanstrukturen ausgebildet.

In einer weiteren bevorzugten Ausführungsform der vorliegende Erfindung bedeutet R³ eine Einheit der allgemeinen Formel 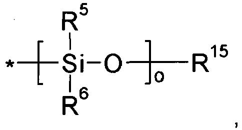 worin R⁵, R⁶, R¹⁵ und o die oben genannten Bedeutungen aufweisen.

Die bevorzugten Ausführungsformen für R⁵ und R⁶ entsprechen unabhängig voneinander den für R² genannten möglichen und bevorzugten Ausführungsformen. Ganz besonders bevorzugt sind R⁵ und R⁶ unabhängig voneinander ausgewählt aus Methyl, Ethyl, Hexyl, Octyl, Decyl, Dodecyl.

Mögliche und bevorzugte Ausführungsformen für R¹⁵ entsprechen in einer möglichen Ausführungsform unabhängig voneinander den bezüglich R² genannten möglichen und bevorzugten Ausführungsformen. Ganz besonders bevorzugt ist R¹⁵ in dieser Ausführungsform ausgewählt aus Methyl, Ethyl.

In einer weiteren erfindungsgemäßen Ausführungsform kann R¹⁵ Einheit der allgemeinen Formel 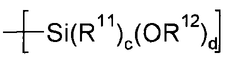 mit den oben genannten Bedeutungen für R¹¹, R¹², c und d bedeuten.

Mögliche und bevorzugte Ausführungsformen für R¹¹ entsprechen in einer möglichen Ausführungsform unabhängig voneinander den bezüglich R² genannten möglichen und bevorzugten Ausführungsformen. Ganz besonders bevorzugt ist R¹¹ in dieser Ausführungsform ausgewählt aus Methyl, Ethyl, Hexyl, Octyl, Decyl, Dodecyl.

Mögliche und bevorzugte Ausführungsformen für R¹² entsprechen in einer möglichen Ausführungsform unabhängig voneinander den bezüglich R² genannten möglichen und bevorzugten Ausführungsformen. Ganz besonders bevorzugt ist R¹² in dieser Ausführungsform ausgewählt aus Methyl, Ethyl.

c bedeutet unabhängig voneinander 0, 1 oder 2, bevorzugt.0.

d bedeutet 3-c, d. h. d kann die Werte 1, 2, oder 3 annehmen, wobei 3 bevorzugt ist.

Die genannten Reste R³ können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R¹ genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Ganz besonders bevorzugte Reste R³ sind Methyl, Butyl, besonders n-Butyl, Hexyl, besonders n-Hexyl, Octyl, besonders n-Octyl, Decyl, besonders n-Decyl und Dodecyl, besonders n-Dodecyl.

"Unabhängig voneinander" bedeutet im Rahmen der vorliegenden Erfindung, dass, falls in der Verbindung der allgemeinen Formel (II) mehrere Reste R³ vorliegen, diese gleich oder unterschiedlich sein können.

Bevorzugt is R⁴ unabhängig voneinander ein lineares oder verzweigtes, gegebenenfalls funktionalisiertes C₁-C₃₀-Alkyl, besonders bevorzugt C₁-C₂₀-Alkyl, ganz besonders bevorzugt C₁-C₁₂-Alkyl. In einer bevorzugten Ausführungsform ist R⁴ ein lineares oder verzweigtes, nicht funktionalisiertes C₁-C₃₀-Alkyl, besonders bevorzugt C₁-C₂₀-Alkyl, ganz besonders bevorzugt C₁-C₁₂-Alkyl. Beispiele für lineare oder verzweigte C₁-C₁₂-Alkylreste sind Methyl, Ethyl, Propyl, insbesondere n-Propyl, iso-Propyl, Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert.-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R⁴ unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₂-C₁₂-Alkenyl. Beispiele für erfindungsgemäß besonders bevorzugte Alkenylreste sind Ethenyl (Vinyl), Propenyl, insbesondere n-Propenyl, isoPropenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R⁴ unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₂-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Noninyl, insbesondere n-Noninyl, iso-Noninyl, tert.-Noniyl, Decinyl, insbesondere n-Decinyl, iso-Decinyl, tert.-Decinyl, Undecinyl, insbesondere n-Undecinyl, iso-Undecinyl, tert.-Undecinyl, oder Dodecenyl, insbesondere n-Dodecinyl, iso-Dodecinyl, tert.-Dodecinyl.

Weiter bevorzugt ist R⁴ unabhängig voneinander ein gegebenenfalls funktionalisiertes C₃-C₂₀-Cycloalkyl, besonders bevorzugt C₃-C₁₂-Cycloalkyl, besonders bevorzugt C₃-C₆-Cycloalkyl, beispielsweise Cyclopropyl, Cyclobutyl, Cyclopentyl, Cyclohexyl.

Weiter bevorzugt ist R⁴ unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R⁴ unabhängig voneinander ein gegebenenfalls funktionalisiertes C₁-C₂₀-Heteroalkyl, besonders bevorzugt C₁-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R⁴ unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl, Biaryle.

Weiter bevorzugt ist R⁴ unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R⁴ unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R⁴ unabhängig voneinander ein gegebenenfalls funktionalisiertes C₅-C₂₂-Heterorayl, besonders bevorzugt C₅-C₁₂-Heteroaryl.

R⁴ kann in einer Ausführungsform -OR¹⁸ bedeuten, wobei R¹⁸ die oben genannten Bedeutungen aufweist. Mögliche und bevorzugte Ausführungsformen für R¹⁸ entsprechen in einer möglichen Ausführungsform unabhängig voneinander den bezüglich R² genannten möglichen und bevorzugten Ausführungsformen. Ganz besonders bevorzugt ist R¹⁸ in dieser Ausführungsform ausgewählt aus Methyl, Ethyl, Hexyl, Octyl, Decyl, Dodecyl. Wenn R⁴ -OR¹⁸ bedeutet, werden bei der Modifizierung der Partikeloberfläche vernetzte Siloxanstrukturen ausgebildet.

In einer weiteren bevorzugten Ausführungsform der vorliegende Erfindung bedeutet R⁴ eine Einheit der allgemeinen Formel 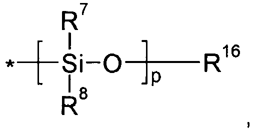 worin R⁷, R⁸, R¹⁶ und p die oben genannten Bedeutungen aufweisen.

Die bevorzugten Ausführungsformen für R⁷ und R⁸ entsprechen unabhängig voneinander den für R² genannten möglichen und bevorzugten Ausführungsformen. Ganz besonders bevorzugt sind R⁷ und R⁸ unabhängig voneinander ausgewählt aus Methyl, Ethyl, Hexyl, Octyl, Decyl, Dodecyl.

Mögliche und bevorzugte Ausführungsformen für R¹⁶ entsprechen in einer möglichen Ausführungsform unabhängig voneinander den bezüglich R² genannten möglichen und bevorzugten Ausführungsformen. Ganz besonders bevorzugt ist R¹⁶ in dieser Ausführungsform ausgewählt aus Methyl, Ethyl.

In einer weiteren erfindungsgemäßen Ausführungsform kann R¹⁶ Einheit der allgemeinen Formel 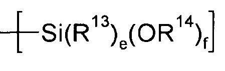 mit den oben genannten Bedeutungen für R¹³, R¹⁴, e und f bedeuten.

Mögliche und bevorzugte Ausführungsformen für R¹³ entsprechen in einer möglichen Ausführungsform unabhängig voneinander den bezüglich R² genannten möglichen und bevorzugten Ausführungsformen. Ganz besonders bevorzugt ist R¹³ in dieser Ausführungsform ausgewählt aus Methyl, Ethyl, Hexyl, Octyl, Decyl, Dodecyl.

Mögliche und bevorzugte Ausführungsformen für R¹⁴ entsprechen in einer möglichen Ausführungsform unabhängig voneinander den bezüglich R² genannten möglichen und bevorzugten Ausführungsformen. Ganz besonders bevorzugt ist R¹⁴ in dieser Ausführungsform ausgewählt aus Methyl, Ethyl.

e bedeutet unabhängig voneinander 0, 1 oder 2, bevorzugt 0.

f bedeutet 3-e, d. h. f kann die Werte 1, 2, oder 3 annehmen, wobei 3 bevorzugt ist.

Die genannten Reste R⁴ können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R¹ genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Ganz besonders bevorzugte Reste R⁴ sind Methyl und Ethyl.

"Unabhängig voneinander" bedeutet im Rahmen der vorliegenden Erfindung, dass, falls in der Verbindung der allgemeinen Formel (II) mehrere Reste R⁴ vorliegen, diese gleich oder unterschiedlich sein können.

Für die Reste R⁵, R⁶, R⁷ und R⁸ gilt unabhängig voneinander das bezüglich der Reste R³ und R⁴ Gesagte. Besonders bevorzugte Reste R⁵, R⁶, R⁷ und R⁸ sind unabhängig voneinander ausgewählt aus Methyl oder Ethyl.

In der Verbindung der allgemeinen Formel (I) bedeutet n im Allgemeinen 1, 2 oder 3. Bevorzugt bedeutet n in der Verbindung der allgemeinen Formel (I) 1 oder 2. Besonders bevorzugt bedeutet n in der Verbindung der allgemeinen Formel (I) 1.

Daher betrifft die vorliegende Erfindung bevorzugt die erfindungsgemäße Mischung, wobei in der Verbindung der allgemeinen Formel (I) n 1 oder 2, besonders bevorzugt 1, ist.

In den Polysiloxanen der allgemeinen Formel (II) bedeutet m, o oder p unabhängig voneinander im Allgemeinen 1 bis 500, bevorzugt 1 bis 50, besonders bevorzugt 1 bis 20.

Erfindungsgemäß besonders bevorzugte Verbindung der allgemeinen Formel (I) sind ausgewählt aus der Gruppe bestehend aus [2-(3-Cyclohexenyl)ethyl]trimethoxysilan, Trimethoxy(7-octen-I-yl)silan, iso-Octyltrimethoxysilan, N-(3-Triethoxysilylpropyl)methoxyethoxyethoxyethylcarbamat, N-(3-Triethoxysilylpropyl)methoxy-ethoxyethoxyethylcarbamat, 3-(methacryloyloxy)propyltrimethoxysilan, Allyltrimethoxysilan, 3-Acryloxypropyltrimethoxysilan, 3-(Methacryloyloxy)propyl-triethoxysilan, 3-(Methacryloyloxy)propylmethyldimethoxysilan, 3-Acryloyloxypropyl)methyldimethoxysilan, 3-(Methacryloyloxy)propyldimethylethoxysilan, 3-(Methacryloyloxy)propyldimethylethoxysilan, Vinyldimethyl-5-ethoxysilan, Phenyltrimethoxysilan, n-Octyltrimethoxysilan, Dodecyltrimethoxysilan, iso-Octyltrimethoxysilan, Octadecyltrimethoxysilan, Propyltrimethoxysilan, Hexyltrime-thoxysilan, Vinylmethyldiacetoxysilan, Vinylmethyldiethoxysilan, Vinyltriacetoxysilan, Vinyltriethoxysifan, Vinyltriisopropoxysilan, Vinyltrimethoxysilan, Vinyltriphenoxysilan, Vinyltri-tbutoxysilan, Vinyltris-isobutoxysilan, Vinyltriisopropenoxysilan, Vinyltris(2-methoxyethoxy)silan, Styrylethyltrimethoxysilan, Mercaptopropyltrimethoxysilan, 3-glycidoxypropyl-trimethoxysilan, Heptamethyl(2-[tris(2-methoxyethoxy)silyl]ethyl)-trisiloxan und Mischungen davon.

Eine erfindungsgemäß bevorzugte Klasse von Polysiloxanen der allgemeinen Formel (II) bzw. Polysiloxane der allgemeinen Formel (I) enthaltend Gruppen der allgemeinen Formel (IIa) sind Polydimethylsiloxane, die beispielsweise Methoxy und/oder Ethoxy-Endgruppen aufweisen können.

Die Umsetzung der genannten Metalloxidpartikel mit den Verbindungen der allgemeinen Formel (I) oder den Polysiloxanen der allgemeinen Formel (II) bzw. mit Polysiloxanen der allgemeinen Formel (I) enthaltend Gruppen der allgemeinen Formel (IIa) kann nach dem Fachmann bekannten Verfahren erfolgen, beispielsweise Inkontaktbringen der Substrate in einem Lösungsmittel, beispielsweise Toluol oder Wasser, bei einer Temperatur von Raumtemperatur bis Siedetemperatur des Lösungsmittels. Nach üblicher Aufarbeitung kann das Umsetzungsprodukt aus Metalloxidpartikel und Verbindungen der allgemeinen Formel (I) oder Polysiloxanen der allgemeinen Formel (II) bzw. Polysiloxanen der allgemeinen Formel (I) enthaltend Gruppen der allgemeinen Formel (IIa) erhalten werden.

Dabei erfolgt in einem ersten Schritt die Hydrolyse des Siliziumethers (Si-OR + H₂O) in das Silanol (Si-OH + ROH), dann erfolgt in einem zweiten Schritt Kondensation der oberflächlichen Hydroxylgruppen mit dem Silanol zum Produkt (Si-OH + M-OH → Si-O-M + H₂O). Erfindungsgemäß kann in den genannten Silizium enthaltenden Verbindungen lediglich SiOR² hydrolysiert werden, R¹, R³ und alle weiteren genannten Reste können nicht hydrolysiert werden.

Die Hydrolyse der Alkoxysilane kann durch ein Absenken des pH-Wertes der Lösung durch Zugabe von Säure beschleunigt werden. Dieser Schritt kann entweder durchgeführt werden, bevor die Silane mit den Metalloxidpartikeln zusammengegeben werden, oder erst danach. In letzterem Fall werden pH-Wert und Säure bevorzugt so gewählt, dass die Oxidpartikel davon nicht angegriffen werden. Bevorzugt ist hierbei die Verwendung von Essigsäure oder Salpetersäure. Weiter bevorzugt ist die Einstellung eines pH-Wertes von 3 bis 4. Unter Umständen verändert sich während der Reaktion der pH-Wert des Reaktionsansatzes. In diesem Fall ist es sinnvoll, den pH-Wert zur Vervollständigung der Oberflächenfixierung erneut auf 3 bis 4 einzustellen. Eine weitere Beschleunigung der Abreaktion kann durch ein Arbeiten bei erhöhter Temperatur, bevorzugt nahe am Siedepunkt des Lösungsmittels, erzielt werden.

Nach Erreichen des gewünschten Reaktionsgrades kann der Feststoff entweder durch Filtration oder ähnliche dem Fachmann bekannte Verfahren von der Lösung getrennt werden oder die Lösung wird, bevorzugt unter Zuhilfenahme von Unterdruck und/oder erhöhter Temperatur, eingetrocknet.

Bei Bedarf werden anschließend der Kondensationsgrad der Hydroxyspezies und damit die Vernetzung erhöht, indem eine Temperaturbehandlung erfolgt. Dabei ist zu beachten, dass diese Temperatur so gewählt wird, dass alle Reaktionspartner unter den gegebenen Bedingungen noch stabil sind. Als besonders geeignet haben sich dabei Temperaturen oberhalb Raumtemperatur, beispielsweise bis zu 200 °C, bevorzugt bis zu 160 °C, herausgestellt. Bevorzugt wird zusätzlich das sich bei der Kondensation bildende Wasser aus der Reaktionszone entfernt.

Eine weitere Möglichkeit, das Silanreagenz mit den Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, in Kontakt zu bringen, besteht im Aufsprühen einer Lösung des Reagenzes auf den Feststoff. Bevorzugt werden hierzu die Alkoxysilane bereits in der Lösung in die Silanole überführt. Vorteil dieses Vorgehens ist, dass im Trocknungsschritt weniger Lösungsmittel abgedampft werden muss. Die Behandlung nach der Trocknung kann wie oben beschrieben erfolgen.

Die vorliegende Erfindung betrifft daher auch ein Verfahren zur Herstellung eines an der Oberfläche modifizierten Partikels wie oben definiert durch Inkontaktbringen des zu modifizierenden Metalloxidpartikels, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit einer Verbindung der allgemeinen Formel (I) oder mit Polysiloxanen der allgemeinen Formel (I) enthaltend Gruppen der allgemeinen Formel (IIa) wie oben definiert.

Die vorliegende Erfindung betrifft bevorzugt das erfindungsgemäße Verfahren, wobei das Inkontaktbringen des zu modifizierenden Metalloxidpartikels, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit der Verbindung der allgemeinen Formel (I) oder mit Polysiloxanen der allgemeinen Formel (I) enthaltend Gruppen der allgemeinen Formel (IIa), wie oben definiert, durch Aufsprühen erfolgt.

Die vorliegende Erfindung betrifft weiterhin bevorzugt das erfindungsgemäße Verfahren, wobei die Reaktion durch Einstellen des pH-Wertes beschleunigt wird, bevorzugt durch Zugabe von Säure.

Die vorliegende Erfindung betrifft weiterhin bevorzugt das erfindungsgemäße Verfahren, wobei nach Trocknen des Produkts eine Temperaturbehandlung erfolgt, bevorzugt bei bis zu 160 °C.

Die vorliegende Erfindung betrifft weiterhin bevorzugt das erfindungsgemäße Verfahren, wobei das Inkontaktbringen durch Aufsprühen der Verbindungen der allgemeinen Formel (I) oder der Polysiloxane der allgemeinen Formel (I) enthaltend Gruppen der allgemeinen Formel (IIa), wie oben definiert, auf den zu modifizierenden Metalloxidpartikel erfolgt.

Die erfindungsgemäße stabile Mischung enthält neben den genannten funktionalisierten Metalloxidpartikeln wenigstens ein Lösungsmittel, wenigstens eine oberflächenaktive Substanz oder eine Mischung davon.

Es wurde erfindungsgemäß überraschenderweise gefunden, dass die erfindungsgemäßen Umsetzungsprodukte, d. h. die an der Oberfläche funktionalisierten Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, in Mischungen mit Lösungsmittel und/oder oberflächenaktiven Verbindungen besonders stabil sind, d. h. es erfolgt keine Abspaltung der oberflächlich angebundenen Siliziumverbindungen.

Das in der erfindungsgemäßen Mischung vorliegende wenigstens eine Lösungsmittel ist bevorzugt ausgewählt aus der Gruppe bestehend aus aromatischen Kohlenwasserstoffen, beispielsweise Benzol, Toluol, Xylol, Alkoholen, beispielsweise Methanol, Ethanol, Propanole, wie n-Propanol, iso-Propanol, Butanole, wie n-Butanol, iso-Butanol, tert.-Butanol, Ethern, wie Diethylether, Methyl-tert.-butyl-ether, iso-Butyl-tert.-Butylether, cyclischen Ethern, wie Tetrahydrofuran, Dioxan, Estern, cyclischen Estern, Alkanen, wie Hexan, Cycloalkanen, wie Cyclohexan, Olefinen, Cycloolefinen, Wasser und Mischungen davon. Werden erfindungsgemäß Mischungen von Lösungsmitteln eingesetzt, so werden bevorzugt Lösungsmittel eingesetzt, die vollständig miteinander mischbar sind, d. h. beim Mischen eine Phase ausbilden.

Daher betrifft die vorliegende Erfindung bevorzugt die erfindungsgemäße Mischung, wobei das wenigstens eine Lösungsmittel ausgewählt ist aus der Gruppe bestehend aus aromatischen Kohlenwasserstoffen, beispielsweise Benzol, Toluol, Xylol, Alkoholen, beispielsweise Methanol, Ethanol, Propanole, wie n-Propanol, iso-Propanol, Butanole, wie n-Butanol, iso-Butanol, tert.-Butanol, Ethern, wie Diethylether, Methyl-tert.-butyl-ether, iso-Butyl-tert.-Butylether, cyclischen Ethern, wie Tetrahydrofuran, Dioxan, Estern, cyclischen Estern, Alkanen, wie Hexan, Cycloalkanen, wie Cyclohexan, Olefinen, Cycloolefinen, Wasser und Mischungen davon.

Die erfindungsgemäße Mischung findet sich in einer bevorzugten Ausführungsform in Verfahren wieder, in denen die oberflächlich modifizierten Partikel mit besonders großen Mengen Lösungsmittel in Kontakt gebracht werden.

In der erfindungsgemäßen Mischung liegt im Allgemeinen ein Feststoffgehalt von bis zu 70 Gew.-%, bevorzugt bis zu 60 Gew.-% vor. Daraus ergibt sich, dass der Gehalt an wenigstens einem Lösungsmittel in der erfindungsgemäßen Mischung im Allgemeinen mindestens 30 Gew.-%, bevorzugt mindestens 40 Gew.-%, beträgt, d. h. im Allgemeinen 30 bis 99,9 Gew.-%, bevorzugt 40 bis 99,9 Gew.-% Lösungsmittel. Erfindungsgemäß wird unter Feststoffgehalt der Gehalt an erfindungsgemäß an der Oberfläche modifizierten Partikeln und gegebenenfalls weiteren vorhandenen Feststoffen verstanden.

Die in der erfindungsgemäßen Mischung vorliegende wenigstens eine oberflächenaktive Substanz ist bevorzugt ausgewählt aus der Gruppe bestehend aus nicht-ionischen, anionischen, kationischen oder zwitterionischen Tensiden und Mischungen davon.

Erfindungsgemäß bevorzugte Beispiele für nicht-ionische Tenside sind Fettalkoholpolyglykolether, insbesondere Fettalkohol-polyethylenglykolether.

Erfindungsgemäß bevorzugte Beispiele für anionische Tenside sind Alkylbenzolsulfonate, sekundäre Alkansulfonate, α-Olefinsulfonate, Fettalkoholsulfate oder Fettalkoholethersulfate.

Erfindungsgemäß bevorzugte Beispiele für kationische Tenside sind Stearyltrimethylammoniumsalze.

Erfindungsgemäß bevorzugte Beispiele für zwitterionische Tenside sind Sultaine, Fettsäureamidoalkylhydroxysultain oder Alkylbetaine.

Erfindungsgemäß besonders bevorzugte oberflächenaktive Substanzen sind Natrium-Alkylphenolethersulfate.

In der erfindungsgemäßen Mischung liegt die wenigstens eine oberflächenaktive Substanz im Allgemeinen in einer Menge von 0,001 bis 20 Gew.-%, bevorzugt 0,01 bis 15 Gew.-%, besonders bevorzugt 0,1 bis 10 Gew.-%, jeweils bezogen auf die gesamte Mischung, vor. Liegt erfindungsgemäß wenigstens eine oberflächenaktive Substanz vor, so wird die oben genannte Menge an wenigstens einem Lösungsmittel entsprechend angepasst.

Die an der Oberfläche funktionalisierten Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, liegen In der erfindungsgemäßen Mischung im Allgemeinen in einer Menge von 0,1 bis 70 Gew.-%, bevorzugt 0,1 bis 60 Gew.-%, vor.

Liegen in der erfindungsgemäßen Mischung gegebenenfalls weitere Feststoffe vor, so wird die oben genannte Menge von an der Oberfläche funktionalisierten Metalloxidpartikel entsprechend angepasst.

In allen möglichen Ausführungsformen addieren sich die Mengen von an der Oberfläche funktionalisierten Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, wenigstens einem Lösungsmittel, gegebenenfalls vorliegenden oberflächenaktiven Substanzen und gegebenenfalls vorliegenden weiteren Feststoffen zu 100 Gew.-%.

Neben den funktionalisierten Partikeln, dem wenigstens einen Lösungsmittel und/oder der wenigstens einen oberflächenaktiven Substanz können in der erfindungsgemäßen Mischung weitere Komponenten vorliegen, beispielsweise oxidische oder metallische Feststoffe und weitere hydrophobe Komponenten. Die Summe der Mengen der in der erfindungsgemäßem Mischung vorliegenden Komponenten addieren sich in jedem Fall zu 100 Gew.-%.

In der erfindungsgemäßen Mischung ist das Massenverhältnis von Lösungsmittel zu modifiziertem Partikel im Allgemeinen größer als 500, bevorzugt 1000, besonders bevorzugt größer als 5000, ganz besonders bevorzugt größer als 10000.

Im Rahmen der vorliegenden Erfindung bedeutet der Begriff "stabile Mischung", dass die in der erfindungsgemäßen Mischung vorliegenden oberflächlich funktionalisierten Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, in der Mischung nicht verändert werden, d. h. die an der Oberfläche vorliegenden Silylgruppen werden nicht von der Oberfläche der Metalloxidpartikel, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, beispielsweise durch Hydrolyse, gelöst, so dass sich die erfindungsgemäße Mischung als ganzes nicht oder nur geringfügig verändert. Dass eine Mischung enthaltend an der Oberfläche modifizierte Partikel stabil im Sinne der vorliegenden Erfindung ist, kann z. B. dadurch gezeigt werden, dass entsprechende Partikel, die in einer erfindungsgemäßen Mischung in Kontakt mit Lösungsmittel und/oder oberflächenaktiven Substanz stehen, chemisch und/oder physikalisch unverändert bleiben. Dies kann beispielsweise durch eine Elementaranalyse oder Bestimmung der hydrophoben Eigenschaften, beispielsweise durch Bestimmung der Schwimmfähigkeit oder des Kontaktwinkels, ermittelt werden.

Die vorliegende Erfindung betrifft auch ein Verfahren zur Behandlung von erfindungsgemäßen, an der Oberfläche modifizierten Partikeln mit mindestens einem Lösungsmittel, wobei das Massenverhältnis von Lösungsmittel zu modifiziertem Partikel größer als 500 ist.

Bezüglich der an der Oberfläche modifizierten Partikeln und der Lösungsmittel gilt für das erfindungsgemäße Verfahren das bezüglich der erfindungsgemäßen Mischung Gesagte.

In dem erfindungsgemäßen Verfahren ist das Massenverhältnis von an der Oberfläche modifiziertem Partikel und dem mindestens einen Lösungsmittel dabei im Allgemeinen größer als 500, bevorzugt größer als 1000, besonders bevorzugt größer als 5000, ganz besonders bevorzugt größer als 10000.

Bei diesem erfindungsgemäßen Verfahren werden die erfindungsgemäßen an der Oberfläche modifizierten Partikel mit einer relativ großen Menge an Lösungsmittel in Kontakt gebracht, d. h. behandelt. Entsprechende erfindungsgemäß Systeme, in denen dieses Behandeln erfolgen kann, sind beispielsweise strömende Systeme, in denen die erfindungsgemäßen an der Oberfläche modifizierten Partikel in beispielsweise kontinuierlichen Verfahren mit weiteren Stoffen, Partikeln, Materialien etc. in Kontakt gebracht werden, beispielsweise kontinuierliche Verfahren zur Agglomeration mit weiteren Stoffen, Partikeln, Materialien etc. in Lösung oder Dispersion. Das erfindungsgemäße Verfahren betrifft auch die Deagglomeration von Agglomeraten aus den erfindungsgemäß an der Oberfläche modifizierten Partikeln und weiteren Stoffen, Partikeln oder Materialien, oder von Agglomeraten der an der Oberfläche modifizierten Partikeln mit sich selbst, beispielsweise ebenfalls in strömenden Systemen.

Die vorliegende Erfindung betrifft auch die Verwendung von erfindungsgemäßen, an der Oberfläche modifizierten Partikeln in Systemen, in denen die modifizierten Partikel mit mindestens einem Lösungsmittel in Kontakt gebracht werden, wobei das Massenverhältnis von Lösungsmittel zu modifiziertem Partikel größer als 500 ist.

Bezüglich der an der Oberfläche modifizierten Partikeln und der Lösungsmittel gilt das bezüglich der erfindungsgemäßen Mischung Gesagte.

Das Massenverhältnis von an der Oberfläche modifiziertem Partikel und dem mindestens einen Lösungsmittel ist dabei im Allgemeinen größer als 500, bevorzugt größer als 1000, besonders bevorzugt größer als 5000, ganz besonders bevorzugt größer als 10000.

Bei dieser erfindungsgemäßen Verwendung werden die erfindungsgemäßen an der Oberfläche modifizierten Partikel mit einer relativ großen Menge an Lösungsmittel in Kontakt gebracht. Entsprechende erfindungsgemäße Systeme, in denen dieses Inkontaktbringen erfolgen kann, sind beispielsweise strömende Systeme, in denen die erfindungsgemäßen an der Oberfläche modifizierten Partikel in beispielsweise kontinuierlichen Verfahren mit weiteren Stoffen, Partikeln, Materialien etc. in Kontakt gebracht werden, beispielsweise kontinuierliche Verfahren zur Agglomeration mit weiteren Stoffen, Partikeln, Materialien etc. in Lösung oder Dispersion. Die erfindungsgemäße Verwendung betrifft auch die Deagglomeration von Agglomeraten aus den erfindungsgemäß an der Oberfläche modifizierten Partikeln und weiteren Stoffen, Partikeln oder Materialien, oder von Agglomeraten der an der Oberfläche modifizierten Partikeln mit sich selbst, beispielsweise ebenfalls in strömenden Systemen.

Die vorliegende Erfindung betrifft auch die Verwendung von erfindungsgemäßen, an der Oberfläche modifizierten Partikeln, insbesondere Magnetpartikeln, in Agglomerations-Deagglomerations-Zyklen.

Auch bei dieser Verwendung gilt für die an der Oberfläche modifizierten Partikeln und die Lösungsmittel das bezüglich der erfindungsgemäßen Mischung Gesagte.

Unter einem Agglomerations-Deagglomerations-Zyklus wird erfindungsgemäß ein Verfahren verstanden, bei dem die erfindungsgemäßen, an der Oberfläche funktionalisierten Partikel, insbesondere Magnetpartikel, mit sich selbst oder anderen Partikeln, Stoffen, Materialien etc. in Lösung oder Dispersion in Kontakt gebracht werden und aufgrund hydrophober Wechselwirkung, ionischer, van-der-Waals-Wechselwirkungen und/oder anderer anziehender Kräfte agglomerieren. Diese Agglomerate werden dann im weiteren Verfahren bearbeitet, beispielsweise von anderen Komponenten und/oder der Lösung oder Dispersion abgetrennt. Nach diesem weiteren Bearbeiten werden die Agglomerate dann wieder getrennt, d. h. deagglomeriert, so dass die an der Oberfläche funktionalisierten Partikel und die anderen Partikel, Stoffe, Materialien etc. wieder jeweils einzeln vorliegen (Deagglomeration). Beispiele für erfindungsgemäß bevorzugte Agglomerations-Deagglomerations-Zyklen sind chemische, physikalische oder biologische Test- oder Trennverfahren, die Reinigung von (schwermetall)-belastetem Erdreich, eine Wasserreinigung, Recycling von Elektroschrott oder eine Schwerkrafttrennung.

In chemischen oder biologischen Test- oder Trennverfahren werden beispielsweise speziell modifizierte magnetische Nanopartikel eingesetzt, die auf ihrer Oberfläche Ankergruppen für ein spezielles Antigen oder Virus aufweisen, z. B. Borrelia, HIV, Hepatitis. Diese speziellen Ankergruppen entsprechen dabei insbesondere der oben genanten Gruppe R¹, die abhängig von der jeweiligen Trenn- oder Testaufgabe entsprechend ausgebildet wird, beispielsweise durch Vorliegen der oben genannten funktionellen Gruppen. Durch eine Anbindung dieser Antigene / Viren auf der modifizierten Partikeloberfläche (Agglomeration) können diese Bestandteile über eine magnetische Trennung aus einer Lösung abgetrennt und entsprechend nachgewiesen werden. Das Recycling der funktionalisierten Magnetpartikel erfolgt dann durch Tenside, die die elektrostatische, adhäsive oder Van-der-Waals-Wechselwirkung zwischen funktionalisiertem Magnetpartikel und Antigen/Viren wieder lösen (Deagglomeration). Auf diese Weise können die aufwändig hergestellten funktionalisierten Magnetitpartikel erneut eingesetzt werden.

Bei der Wasserreinigung können die erfindungsgemäßen modifizierten Partikel, insbesondere Magnetpartikel, verwendet werden. Hierbei kann man z. B. funktionalisierte Magnetitpartikel einsetzen, die organische Bestandteile, Schwebstoffe oder Fetttröpfchen aus dem Wasser entfernen, in dem eine hydrophobe Agglomeration zwischen dem funktionalisierten Magnetitpartikel und der hydrophoben Verunreinigung stattfindet. Diese hydrophoben Agglomerate können durch eine Magnettrennung abgetrennt werden. Um die Wasserreinigung wirtschaftlich zu gestalten, ist es sinnvoll, die hydrophoben Magnetitpartikel wieder von der Verunreinigung zu "entladen" und erneut in den Kreislauf zurückzuführen. Diese "Entladung" kann wieder durch Deagglomeration mit einer speziellen oberflächenaktiven Substanz (Tensid) und/oder durch ein spezielles Lösungsmittel bzw. Lösungsmittelgemisch erfolgen.

Recycling von Elektroschrott kann beispielsweise durch die magnetische Rückgewinnung von Wertstoffen (Ir, Pt, Ru) aus Elektroschrott erfolgen, wobei wieder bevorzugt modifizierte Magnetitpartikel eingesetzt werden können, die - nach einer Hydrophobierung der zu trennenden Wertstoffe - mit diesen agglomerieren und abgetrennt werden können. Nach erfolgter Abtrennung werden die vorliegenden Agglomerate wieder deagglomeriert, so dass die modifizierten Magnetpartikel wieder verwendet werden können.

Ein weiteres Beispiel ist die Schwerkrafttrennung, z. B. über dem Fachmann bekannte Zyklone. Hierdurch können dichtere Bestandeile von weniger dichten über eine Schwerkrafttrennung abgetrennt werden. Falls sich die einzelnen Komponenten nur geringfügig in ihrer Dichte unterscheiden, z. B. Pt-dotierter Hämatit und undotierter Hämatit, kann die Dichte der abzutrennenden Komponente durch Agglomeration mit einer weiteren Komponente erhöht werden. Als modifizierter Partikel wird hierbei beispielsweise die Pt-dotierte Hämatitkomponente erfindungsgemäß hydrophobiert, so dass nach Zugabe von hydrophobiertem Bariumsulfat ein Agglomerat aus dem modifiziertem Hämatit und Bariumsulfat entsteht, welches zu dem undotierten Hämatit einen größeren Dichteunterschied aufweist. Nach erfolgter Abtrennung kann das Agglomerat wieder deagglomeriert werden.

Die vorliegende Erfindung betrifft daher auch bevorzugt die erfindungsgemäße Verwendung, wobei der Agglomerations-Deagglomerations-Zyklus ein chemisches, physikalisches oder biologisches Test- oder Trennverfahren, eine Wasserreinigung, die Reinigung von (schwermetall)-belastetem Erdreich, Recycling von Elektroschrott oder eine Schwerkrafttrennung ist.

Ein erfindungsgemäßer Vorteil ist, dass die erfindungsgemäß oberflächlich modifizierten Partikel unter den bei der Agglomeration und vor allem der Deagglomeration vorliegenden Bedingungen stabil sind, und daher bevorzugt wieder verwertet werden können.

### Beispiele

### Beispiel 1: Allgemeine Verfahren

### Beispiel 1.1: mehrmalige Behandlung des Feststoffs mit Tensidlösung

10 g Feststoff werden in 1 L einer 0,2 gew.-%-igen Lösung von Lutensit A-ES der BASF SE (Mischung von Natrium-Alkylphenolethersulfaten) in Wasser bei Raumtemperatur 2 h gerührt. Anschließend wird der Feststoff abfiltriert und mit 1 L Wasser, 100 mL Ethanol und 100 mL Aceton gewaschen. Der Filterkuchen wird bei 120 °C 4 h im Vakuum getrocknet. Anschließend werden Proben für die Analytik entnommen. Für die erneuten Waschungen wird das restliche Produkt eingesetzt.

### Beispiel 1.2: Schnelltest Schwimmfähigkeit auf Wasser

In einem 5 mL Probengläschen werden 3 mL Wasser eingefüllt. Mit dem Spatel wird anschließend der zu untersuchende Feststoff vorsichtig auf der Wasseroberfläche abgelegt. Anschließend wird beobachtet, ob der Feststoff untergeht oder dauerhaft schwimmt. Bei schwimmenden Feststoffen wird das verschlossene Gefäß 10 s geschüttelt. Anschließend wird beobachtet, ob der Feststoff wieder aufschwimmt oder unter Wasser bleibt.

### Beispiel 1.3: Kontaktwinkelmessung

### Kontaktwinkelmessung an Pulvern:

Kontaktwinkel werden mit einem Standard-Instrument (Dropshape Analysis Instrument, Fa. Kruss DAS 10) gemessen. Ein Schattenbild des Tropfens wird durch eine CCD-Kamera eingefangen und die Tropfenform wird durch computergestützte Bildanalyse ermittelt. Die Messungen werden, wenn nicht anders angegeben, wie in DIN 5560-2 beschrieben, durchgeführt.

### a) Herstellung einer homogenen Pulverschicht

Das Magnetit-Pulver wird als eine ungefähr 1 mm dicke Schicht mit einer 100 µm dicken BASF-Acronal-V215-Kleber-Dispersion auf eine PET-Folie aufgebracht. Unter Verwendung eines Spatels wird das Pulver in den Kleber gepresst und nicht anhaftendes, überschüssiges Material wird durch Schütteln entfernt. Schließlich wird verbleibendes, loses Material durch Blasen mit gereinigtem Stickstoff unter Druck über die Probe entfernt. Dieses Verfahren ergibt eine saubere, homogene Pulveroberfläche über die gesamte Fläche des Substrats von 75 mm x 25 mm.

Pulveroberflächen zeigen normalerweise eine gewisse Rauheit und Kontaktwinkel bzw. deren Messung sind bezüglich dieser Rauheit empfindlich. Daher kann ein direkter Vergleich der Hydrophobizität nur an Pulvern mit gleicher Partikelgrößenverteilung und Partikelform durchgeführt werden. Sorgfältige Oberflächenanalysen unter Verwendung von ToF-SIMS haben gezeigt, dass die Oberfläche der durch dieses Verfahren hergestellten Pulverschicht keine Spuren von Klebstoff aufweist und für das Pulver repräsentativ ist.

### b) Dynamische, fortschreitende Kontaktwinkel-Messung

Ein Milliliter Wasser wird als Tropfen auf der Oberfläche platziert, und es werden kontinuierlich 2 µl/min Wasser zugeführt. Kontinuierlich werden so 20 µl Flüssigkeitsvolumen zugeführt. Ausgehend von einem minimalen Volumen von ungefähr 3 µl werden Kontaktwinkel gemessen, während die Spritzennadel, welche zur Dosierung verwendet wird, im Tropfen verbleibt. Konturmessungen werden mit einer Rate von ungefähr 0,5 Hz gemessen, ausgewertet wird durch eine Tangentenmethode, um den Kontaktwinkel zu bestimmen, der sich direkt an der Drei-Phasen-Kontaktlinie befindet. Diese Kontaktwinkel werden über die Zeit gemittelt, für jede Probe werden fünf fortschreitende Tropfen an verschiedenen Positionen gemessen und der durchschnittliche Wert wird mit einer Standardabweichung ermittelt.

### Beispiel 1.4: Rezyklierungsversuche

Es wird ein Versuch unternommen, nach dem jeweiligen Beispiel hydrophobierten Magnetit als wieder verwertbaren Carrier für die Reinigung von (schwermetall)-belastetem Erdreich zu verwenden. Hierzu werden 3 g Magnetit in ein System eindispergiert, welches 100 g einer Sandmischung (Feststoffgehalt: 1 Gew.-%) enthält. Diese Sandmischung enthält zu 99 Gew.-% anorganische silikatische Bestandteile (z. B. Feldspäte, Glimmer, Katzengold) und zu 1 Gew.-% eine spezielle hydrophobierte anorganische As-haltige Verunreinigung (Enargite). Die Hydrophobierung dieser anorganischen Verunreinigung erfolgt mit Butylxanthat. Nach heftigem Durchmengen des hydrophobierten Magnetits mit dieser Sandmischung wird die Arsenkomponente über hydrophobe Flokkulation mit dem Magnetit abgetrennt. Die hydrophoben Bestandteile werden gesammelt und mit einer 0,1 gew.-%igen Lösung eines Tensids (Lutensit A-ES der BASF SE) behandelt. In einem nächsten magnetischen Trennschritt werden die magnetischen Bestandteile von den unmagnetischen As-haltigen Verunreinigungen abgetrennt. Der hydrophobe Magnetit wird mit einem 1:1-Gemisch aus Wasser und EtOH gewaschen, abfiltriert und erneut mit einer neu hergestellten Sandmischung vermengt. Der Prozess wird insgesamt zehnmal wiederholt.

### Beispiel 2: Herstellung von hydrophobiertem Magnetit

### Beispiel 2.1: mit "OctSi(OMe)₃ silanisiertes Magnetpigment 345 der BASF SE (erfindungsgemäß)

Synthese: Zu einer Lösung aus 370 mg "OctSi(OMe)₃ (97 %-ig, Fa. ABCR) in 30 mL Toluol werden 10 g Magnetpigment 345 (Magnetit Fe^{II}(Fe^{III})₂O₄) der BASF SE gegeben. Der Lösung wird dann 1 mL 25 %ige Essigsäure zugesetzt. Nach 4 h am Rückfluss wird der Feststoff abfiltriert und mit 5 mL Aceton und 1 L dest. Wasser gewaschen. Das Produkt wird bei 120 °C über Nacht im Vakuum getrocknet. Das getrocknete Produkt wird nach Vorzerkleinerung durch ein Analysensieb (400 µm) gestrichen und somit deagglomeriert und homogenisiert.

### Analytik:

Schwimmtest: frischer und zehnfach gewaschener Feststoff schwimmen gleichermaßen auf Wasser (auch nach Unterschütteln);
Elementaranalyse: frisch 0,12 % C, 0,06 % Si, zehnfach gewaschen 0,12 % C, 0,06 % Si;
Kontaktwinkel: frisch 152°, zehnfach gewaschen 146°;
Rezyklierungsversuch: Detektiert man die Ausbeute der As-Komponente, so sinkt bei der Verwendung des mit "OctSi(OMe)₃ silanisierten Magnetpigments 345 der BASF SE die Ausbeute von 95% im ersten Zyklus nur auf 91 % im zehnten Zyklus.

### Beispiel 2.2: mit "HexSi(OMe)₃ silanisiertes Magnetpigment 345 der BASF SE (erfindungsgemäß)

Synthese: Die Synthese erfolgt nach dem in Beispiel 2.1 beschriebenen Schema. Allerdings werden 330 mg ⁿHexSi(OMe)₃ (97 %-ig, Fa. ABCR) als Silanisierungsreagenz eingesetzt.

### Analytik:

Schwimmtest: frischer und zehnfach gewaschener Feststoff schwimmen gleichermaßen auf Wasser (auch nach Unterschütteln);
Elementaranalyse: frisch 0,08 % C, 0,05 % Si, zehnfach gewaschen 0,07 % C, 0,05 % Si;
Kontaktwinkel: frisch 156°, zehnfach gewaschen 152°

### Beispiel 2.3: mit ⁿBuSi(OMe)₃ silanisiertes Magnetpigment 345 der BASF SE (erfindungsgemäß)

Synthese: Die Synthese erfolgt nach dem in Beispiel 2.1 beschriebenen Schema. Allerdings werden 290 mg ⁿBuSi(OMe)₃ (97 %-ig, Fa. ABCR) als Silanisierungsreagenz eingesetzt.

### Analytik:

Schwimmtest: frischer und zehnfach gewaschener Feststoff schwimmen gleichermaßen auf Wasser (auch nach Unterschütteln);
Elementaranalyse: frisch 0,06 % C, 0,05 % Si, zehnfach gewaschen frisch 0,07 % C, 0,05 % Si;
Kontaktwinkel: frisch 146°, zehnfach gewaschen 133°;

### Beispiel 2.4: mit ⁿOctSi(OMe)₃ silanisiertes Magnetpigment 345 der BASF SE (erfindungsgemäß)

Synthese: Die Synthese erfolgt nach dem in Beispiel 2.1 beschriebenen Schema. Allerdings wird Wasser statt Toluol als Lösungsmittel verwendet. Dieses wird mit 25 %iger Essigsäure auf einen pH von 3,5 eingestellt.

### Analytik:

Schwimmtest: frischer und zehnfach gewaschener Feststoff schwimmen gleichermaßen auf Wasser (auch nach Unterschütteln);
Elementaranalyse: frisch 0,10 % C, 0,06 % Si, zehnfach gewaschen 0,10 % C, 0,04 % Si;
Kontaktwinkel: frisch 155°, zehnfach gewaschen 148°;
Rezyklierungsversuch: Detektiert man die Ausbeute der As-Komponente, so sinkt die Ausbeute von 94 % im ersten Zyklus nur auf 92 % im zehnten Zyklus bei der Verwendung des mit ⁿOctSi(OMe)₃ silanisierten Magnetpigments 345.

### Beispiel 2.5: mit ⁿOctSi(OMe)₃ silanisiertes Magnetpigment 345 der BASF SE (erfindungsgemäß)

Synthese: Eine Lösung von 370 mg ⁿOctSi(OMe)₃ (97 %-ig, Fa. ABCR) in 5 mL Wasser wird mit 25 %iger Essigsäure auf pH 3,5 eingestellt und für 60 min bei Raumtemperatur gerührt. Anschließend wird die Lösung auf 10 g Magnetpigment 345 (Magnetit Fe^{II}(Fe^{III})₂O₄) der BASF SE aufgesprüht, wobei der Feststoff stetig durchmischt wird. Das Produkt wird bei 120 °C für 2 h im Vakuum getrocknet. Anschließend wird die Reaktion bei 160 °C innerhalb von 12 h vervollständigt. Das erhaltene Produkt wird nach Vorzerkleinerung durch ein Analysensieb (400 µm) gestrichen und somit deagglomeriert und homogenisiert.

### Analytik:

Schwimmtest: frischer und zehnfach gewaschener Feststoff schwimmen gleichermaßen auf Wasser (auch nach Unterschütteln);
Kontaktwinkel: frisch 151 °, zehnfach gewaschen 154°.

### Beispiel 3: Vergleichsbeispiele

### Vergleichsbeispiel 3.1: kommerzieller, hydrophober Magnetit Bayoxide E8707 H der Fa. Lanxess (nicht erfindungsgemäß)

### Analytik:

Schwimmtest: frischer Feststoff schwimmt auch nach Unterschütteln auf Wasser, bereits zweifach gewaschener Feststoff schwimmt nicht mehr;
Elementaranalyse: frisch 0,10 % C, 0,05 % Si, zehnfach gewaschen 0,03 % C, 0,01 % Si;
Kontaktwinkel: frisch 158°, zehnfach gewaschen 116°
Rezyklierung: Vergleichende Versuche mit einem bereits hydrophoben Magnetit der Firma Lanxess (Produkt: Bayoxide E8707 H) ergeben bereits nach dem vierten Zyklus einen dramatischen Ausbeuteverlust von über 40%. Die Versuche mit diesem Produkt werden danach abgebrochen.

### Vergleichsbeispiel 3.2: mit ⁿOctMe₂SiCl silanisiertes Magnetpigment 345 der BASF SE (nicht erfindungsgemäß)

Synthese: Unter Schutzgasatmosphäre werden 10 g Magnetpigment 345 der BASF SE in 20 mL Toluol suspendiert. Die Suspension wird auf 70 °C aufgeheizt, bevor 0,3 g ⁿOctMe₂SiCl (97 %-ig, Fa. ABCR) zugegeben werden. Die Reaktionsmischung wird anschließend unter Rühren 4 h bei 70 °C gehalten. Anschließend wird der Feststoff abfiltriert, erst mit 50 mL Toluol, dann 50 mL Methanol und abschließend Wasser bis zur Chloridfreiheit der Waschlösung gewaschen. Das Produkt wird bei 120 °C für 4 h im Vakuum getrocknet. Das getrocknete Produkt wird nach Vorzerkleinerung durch ein Analysensieb (400 µm) gestrichen und somit deagglomeriert und homogenisiert.

### Analytik:

Schwimmtest: Feststoff schwimmt auf Wasser (auch nach Unterschütteln), bereits einfach gewaschener Feststoff schwimmt nicht mehr auf Wasser;
Elementaranalyse: frisch 0,10 % C, 0,06 % Si, zehnfach gewaschen 0,06 % C, 0,04 % Si;
Kontaktwinkel: frisch 148°, einfach gewaschen 120°, zehnfach gewaschen 98°

### Vergleichsbeispiel 3.3: mit ⁿBuMe₂SiCl silanisiertes Magnetpigment 345 der BASF SE (nicht erfindungsgemäß)

Synthese: Die Synthese erfolgt nach dem in Beispiel 2.1 beschriebenen Schema. Allerdings werden 0,3 g *ⁿ*BuMe₂SiCl (97 %-ig der Firma ABCR) als Silanisierungsreagenz eingesetzt.

### Analytik:

Schwimmtest: Feststoff schwimmt auf Wasser (nicht nach Unterschütteln), bereits einfach gewaschener Feststoff schwimmt nicht mehr auf Wasser;
Elementaranalyse: frisch 0,09 % C, 0,06 % Si, zehnfach gewaschen frisch 0,03 % C, 0,02 % Si;
Kontaktwinkel: frisch 103°, zehnfach gewaschen 89°

### Vergleichsbeispiel 3.4: mit Octylphosphonsäure hydrophobiertes Magnetpigment 345 der BASF SE (nicht erfindungsgemäß)

Synthese: In einer Apparatur, die aus einem 12 L Kunststoffeimer mit Ausguss als Rührkessel und einem Metallrührer besteht, werden 8,0 kg Wasser vorgelegt. Anschließend werden 2 kg Magnetpigment 345 der BASF SE zudosiert und die Rührgeschwindigkeit des Metallrührers so gewählt, dass das Pigment nicht sedimentiert und ebenfalls keine Luft eingezogen wird (es entsteht keine Schaumkrone). Anschließend werden 12,5 g n-Octylphosphonsäure (OPS, 80 %-ig) der Fa. Albright & Wilson in einer Portion zugegeben und alle Einsatzstoffe für 1,5 h an Luft bei Raumtemperatur vermengt. Nach beendeter Rührzeit wird die Suspension auf eine Porzellannutsche (d = 24 cm mit einem Papierfilter MN 85/90 der Fa. Macherey-Nagel) gegeben. Entstandene Risse im Nutschkuchen werden zur Verbesserung der Waschwirkung zugestrichen. Über Nacht wird im Umlufttrockenschrank bei 110 °C getrocknet. Das getrocknete Produkt wird nach Vorzerkleinerung durch ein Analysensieb (400 µm) gestrichen und somit deagglomeriert und homogenisiert.

### Analytik:

Elementaranalyse: im Endprodukt 0,06 % P;
Rezyklierungsversuch: Bereits nach dem dritten Zyklus wird nur noch eine mangelhafte Ausbeute der As-haltigen Verunreinigung von unter 50% detektiert. Die Versuche werden anschließend abgebrochen;

## Patentansprüche

1. Stabile Mischung enthaltend an der Oberfläche modifizierte Partikel, welche erhalten werden durch Umsetzung von Metalloxidpartikeln, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall ist, mit wenigstens einer Verbindung der allgemeinen Formel (I)
R¹ₙ-Si(OR²)₄₋ₙ (I)
worin R¹, R² und n die folgenden Bedeutungen haben:
R¹ unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
R² unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₂₀-Alkenyl, lineares oder verzweigtes, gegebenenfalls funktionalisiertes C₂-C₂₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heteroaryl,
und/oder
Gruppe der allgemeinen Formel (IIa)
-SiR¹ₘ(OR²)₃₋ₘ (IIa)
wobei R¹ und R² unabhängig voneinander die oben genannten Bedeutungen haben und m unabhängig voneinander 0, 1, 2 oder 3 bedeuten kann,
n 1, 2 oder 3,
und wenigstens ein Lösungsmittel, wenigstens eine oberflächenaktive Substanz oder eine Mischung davon.

2. Mischung nach Anspruch 1, **dadurch gekennzeichnet, dass** das Massenverhältnis von Lösungsmittel zu modifiziertem Partikel größer als 500 ist.

3. Mischung nach Anspruch 1 oder 2, **dadurch gekennzeichnet, dass** in der Verbindung der allgemeinen Formel (I) n 1 oder 2, bevorzugt 1, ist.

4. Mischung nach einem der Ansprüche 1 bis 3, **dadurch gekennzeichnet, dass** in der Verbindung der allgemeinen Formel (I) oder in der Gruppe der allgemeinen Formel (IIa) R² Methyl oder Ethyl ist.

5. Mischung nach einem der Ansprüche 1 bis 4, **dadurch gekennzeichnet, dass** das wenigstens eine Lösungsmittel ausgewählt ist aus der Gruppe bestehend aus aromatischen Kohlenwasserstoffen, Alkoholen, Ethern, cyclischen Ethern, Estern, cyclischen Estern, Alkanen, Cycloalkanen, Olefinen, Cycloolefinen, Wasser und Mischungen davon.

6. Mischung nach einem der Ansprüche 1 bis 5, **dadurch gekennzeichnet, dass** die wenigstens eine oberflächenaktive Substanz ausgewählt ist aus der Gruppe bestehend aus nicht-ionischen, anionischen, kationischen oder zwitterionischen Tensiden und Mischungen davon.

7. Verfahren zur Behandlung von an der Oberfläche modifizierten Partikel wie in Anspruch 1 definiert mit mindestens einem Lösungsmittel, **dadurch gekennzeichnet, dass** das Massenverhältnis von Lösungsmittel zu modifiziertem Partikel größer als 500 ist.

8. Verwendung von an der Oberfläche modifizierten Partikeln wie in Anspruch 1 definiert in Systemen, in denen die modifizierten Partikel mit mindestens einem Lösungsmittel in Kontakt gebracht werden, **dadurch gekennzeichnet, dass** das Massenverhältnis von Lösungsmittel, zu modifiziertem Partikel größer als 500 ist.

9. Verwendung von an der Oberfläche modifizierten Partikeln wie in Anspruch 1 definiert in Agglomerations-Deagglomerations-Zyklen.

10. Verwendung nach Anspruch 8, **dadurch gekennzeichnet, dass** der Agglomerations-Deagglomerations-Zyklus ein chemisches, physikalisches oder biologisches Test- oder Trennverfahren, die Reinigung von (schwermetall)-belastetem Erdreich, eine Wasserreinigung, Recycling von Elektroschrott oder eine Schwerkrafttrennung ist.

11. Verfahren zur Herstellung eines an der Oberfläche modifizierten Partikels wie in Anspruch 1 definiert durch Inkontaktbringen des zu modifizierenden Metalloxidpartikels mit einer Verbindung der allgemeinen Formel (I) oder mit Polysiloxanen der allgemeinen Formel (I) enthaltend Gruppen der allgemeinen Formel (IIa) wie in Anspruch 1 definiert.

12. Verfahren nach Anspruch 11, **dadurch gekennzeichnet, dass** das Inkontaktbringen des zu modifizierenden Metalloxidpartikels mit der Verbindung der allgemeinen Formel (I) oder mit Polysiloxanen der allgemeinen Formel (I) enthaltend Gruppen der allgemeinen Formel (IIa), wie in Anspruch 1 definiert, durch Aufsprühen erfolgt.

13. Verfahren nach Anspruch 11 oder 12, **dadurch gekennzeichnet, dass** die Reaktion durch Einstellen des pH-Wertes beschleunigt wird, bevorzugt durch Zugabe von Säure.

14. Verfahren nach einem der Ansprüche 11 bis 13, **dadurch gekennzeichnet, dass** nach Trocknen des Produkts eine Temperaturbehandlung erfolgt, bevorzugt bei bis zu 160 °C.

15. Verfahren nach einem der Ansprüche 11 bis 14, **dadurch gekennzeichnet, dass** das Inkontaktbringen durch Aufsprüchen der Verbindungen der allgemeinen Formel (I) oder der Polysiloxane der allgemeinen Formel (I) enthaltend Gruppen der allgemeinen Formel (IIa), wie in Anspruch 1 definiert, auf den zu modifizierenden Metalloxidpartikel erfolgt.

## Claims

1. A stable mixture comprising surface-modified particles which are obtained by reacting metal oxide particles where the metal oxide used is an oxide of a metal selected from the group consisting of Mn, Fe, Co, Ni, Cu, combinations thereof and mixed oxides of these metals with at least one alkaline earth metal, with at least one compound of the general formula (I)
R¹ₙ-Si(OR²)₄₋ₙ (I)
where R¹, R², and n have the following meanings:
the radicals R¹ are each, independently of one another, hydrogen, linear or branched, optionally functionalized C₁-C₃₀-alkyl, linear or branched, optionally functionalized C₂-C₃₀-alkenyl, linear or branched, optionally functionalized C₂-C₃₀-alkynyl, optionally functionalized C₃-C₂₀-cycloalkyl, optionally functionalized C₃-C₂₀-cycloalkenyl, optionally functionalized C₁-C₂₀-heteroalkyl, optionally functionalized C₅-C₂₂-aryl, optionally functionalized C₆-C₂₃-alkylaryl, optionally functionalized C₆-C₂₃-arylalkyl, optionally functionalized C₅-C₂₂-heteroaryl,
the radicals R² are each, independently of one another, hydrogen, linear or branched, optionally functionalized C₁-C₃₀-alkyl, linear or branched, optionally functionalized C₂-C₂₀-alkenyl, linear or branched, optionally functionalized C₂-C₂₀-alkynyl, optionally functionalized C₃-C₂₀-cycloalkyl, optionally functionalized C₃-C₂₀-cycloalkenyl, optionally functionalized C₁-C₂₀-heteroalkyl, optionally functionalized C₅-C₂₂-aryl, optionally functionalized C₆-C₂₃-alkylaryl, optionally functionalized C₆-C₂₃-arylalkyl, optionally functionalized C₅-C₂₂-heteroaryl,
and/or
a group of the general formula (IIa)
-SiR¹ₘ(OR²)₃₋ₘ (IIa)
where R¹ and R² have, independently of one another, the abovementioned meanings and m can be 0, 1, 2 or 3,
n is 1, 2 or 3,
and at least one solvent, at least one surface-active substance or a mixture thereof.

2. The mixture according to claim 1, wherein the mass ratio of solvent to modified particle is greater than 500.

3. The mixture according to claim 1 or 2, wherein n in the compound of the general formula (I) is 1 or 2, preferably 1.

4. The mixture according to any of claims 1 to 3, wherein R² in the compound of the general formula (I) or in the group of the general formula (IIa) is methyl or ethyl.

5. The mixture according to any of claims 1 to 4, wherein the at least one solvent is selected from the group consisting of aromatic hydrocarbons, alcohols, ethers, cyclic ethers, esters, cyclic esters, alkanes, cycloalkanes, olefins, cycloolefins, water and mixtures thereof.

6. The mixture according to any of claims 1 to 5, wherein the at least one surface-active substance is selected from the group consisting of nonionic, anionic, cationic and zwitterionic surfactants and mixtures thereof.

7. A process for treating surface-modified particles as defined in claim 1 with at least one solvent, wherein the mass ratio of solvent to modified particle is greater than 500.

8. The use of surface-modified particles as defined in claim 1 in systems in which the modified particles are brought into contact with at least one solvent, wherein the mass ratio of solvent to modified particle is greater than 500.

9. The use of surface-modified particles as defined in claim 1 in agglomeration-deagglomeration cycles.

10. The use according to claim 8, wherein the agglomeration-deagglomeration cycle is a chemical, physical or biological test method or separation process, decontamination of (heavy metal-)contaminated earth, water purification, recycling of electrical/electronic scrap or gravity separation.

11. A process for producing a surface-modified particle as defined in claim 1 by bringing the metal oxide particle to be modified into contact with a compound of the general formula (I) or with polysiloxanes of the general formula (I) comprising groups of the general formula (IIa) as defined in claim 1.

12. The process according to claim 11, wherein the contacting of the metal oxide particle to be modified with the compound of the general formula (I) or with polysiloxanes of the general formula (I) comprising groups of the general formula (IIa) as defined in claim 1 is effected by spraying-on.

13. The process according to claim 11 or 12, wherein the reaction is accelerated by adjustment of the pH, preferably by addition of acid.

14. The process according to any of claims 11 to 13, wherein drying of the product is followed by a heat treatment, preferably at up to 160°C.

15. The process according to any of claims 11 to 14, wherein the contacting is effected by spraying of the compounds of the general formula (I) or the polysiloxanes of the general formula (I) comprising groups of the general formula (IIa) as defined in claim 1 onto the metal oxide particles to be modified.

## Revendications

1. Mélange stable contenant des particules modifiées en surface, qui sont obtenues par mise en réaction de particules d'oxyde métallique, l'oxyde métallique utilisé étant un oxyde d'un métal choisi dans le groupe constitué par Mn, Fe, Co, Ni, Cu, leurs combinaisons et les oxydes mixtes de ces métaux avec au moins un métal alcalino-terreux, avec au moins un composé de formule générale (I)
R¹ₙ-Si(OR²)₄₋ₙ (I)
dans laquelle R¹, R² et n ont les significations suivantes :
R¹ indépendamment les uns des autres hydrogène, alkyle en C₁-C₃₀ linéaire ou ramifié, éventuellement fonctionnalisé, alcényle en C₂-C₃₀ linéaire ou ramifié, éventuellement fonctionnalisé, alcynyle en C₂-C₃₀ linéaire ou ramifié, éventuellement fonctionnalisé, cycloalkyle en C₃-C₂₀ éventuellement fonctionnalisé, cycloalcényle en C₃-C₂₀ éventuellement fonctionnalisé, hétéroalkyle en C₁-C₂₀ éventuellement fonctionnalisé, aryle en C₅-C₂₂ éventuellement fonctionnalisé, alkylaryle en C₆-C₂₃ éventuellement fonctionnalisé, arylalkyle en C₆-C₂₃ éventuellement fonctionnalisé, hétéroaryle en C₅-C₂₂ éventuellement fonctionnalisé,
R² indépendamment les uns des autres hydrogène, alkyle en C₁-C₃₀ linéaire ou ramifié, éventuellement fonctionnalisé, alcényle en C₂-C₂₀ linéaire ou ramifié, éventuellement fonctionnalisé, alcynyle en C₂-C₂₀ linéaire ou ramifié, éventuellement fonctionnalisé, cycloalkyle en C₃-C₂₀ éventuellement fonctionnalisé, cycloalcényle en C₃-C₂₀ éventuellement fonctionnalisé, hétéroalkyle en C₁-C₂₀ éventuellement fonctionnalisé, aryle en C₅-C₂₂ éventuellement fonctionnalisé, alkylaryle en C₆-C₂₃ éventuellement fonctionnalisé, arylalkyle en C₆-C₂₃ éventuellement fonctionnalisé, hétéroaryle en C₅-C₂₂ éventuellement fonctionnalisé,
et/ou
un groupe de formule générale (IIa)
-SiR¹ₘ(OR²)₃₋ₘ (IIa)
dans laquelle R¹ et R² ont indépendamment l'un de l'autre les significations indiquées précédemment et les m peuvent signifier indépendamment l'un de l'autre 0, 1, 2 ou 3,
n 1, 2 ou 3,
et au moins un solvant, au moins une substance tensioactive ou un mélange de ceux-ci.

2. Mélange selon la revendication 1, **caractérisé en ce que** le rapport en masse entre le solvant et les particules modifiées est supérieur à 500.

3. Mélange selon la revendication 1 ou 2, **caractérisé en ce que** n représente 1 ou 2, de préférence 1, dans le composé de formule générale (I).

4. Mélange selon l'une quelconque des revendications 1 à 3, **caractérisé en ce que** R² représente méthyle ou éthyle dans le composé de formule générale (I) ou dans le groupe de formule générale (IIa).

5. Mélange selon l'une quelconque des revendications 1 à 4, **caractérisé en ce que** le ou les solvants sont choisis dans le groupe constitué par les hydrocarbures aromatiques, les alcools, les éthers, les éthers cycliques, les esters, les esters cycliques, les alcanes, les cycloalcanes, les oléfines, les cyclooléfines, l'eau et leurs mélanges.

6. Mélange selon l'une quelconque des revendications 1 à 5, **caractérisé en ce que** la ou les substances tensioactives sont choisies dans le groupe constitué par les tensioactifs non ioniques, anioniques, cationiques ou zwitterioniques et leurs mélanges.

7. Procédé de traitement de particules modifiées en surface telles que définies dans la revendication 1 avec au moins un solvant, **caractérisé en ce que** le rapport en masse entre le solvant et les particules modifiées est supérieur à 500.

8. Utilisation de particules modifiées en surface telles que définies dans la revendication 1 dans des systèmes dans lesquels les particules modifiées sont mises en contact avec au moins un solvant, **caractérisée en ce que** le rapport en masse entre le solvant et les particules modifiées est supérieur à 500.

9. Utilisation de particules modifiées en surface telles que définies dans la revendication 1 dans des cycles d'agglomération-désagglomération.

10. Utilisation selon la revendication 8, **caractérisée en ce que** le cycle d'agglomération-désagglomération est un procédé de test ou de séparation chimique, physique ou biologique, la purification d'une terre polluée (avec des métaux lourds), une purification d'eau, un recyclage de déchets électriques ou une séparation par la force de pesanteur.

11. Procédé de fabrication d'une particule modifiée en surface telle que définie dans la revendication 1 par mise en contact de la particule d'oxyde métallique à modifier avec un composé de formule générale (I) ou avec des polysiloxanes de formule générale (I) contenant des groupes de formule générale (IIa) tels que définis dans la revendication 1.

12. Procédé selon la revendication 11, **caractérisé en ce que** la mise en contact de la particule d'oxyde métallique à modifier avec le composé de formule générale (I) ou avec des polysiloxanes de formule générale (I) contenant des groupes de formule générale (IIa), tels que définis dans la revendication 1, a lieu par pulvérisation.

13. Procédé selon la revendication 11 ou 12, **caractérisé en ce que** la réaction est accélérée par ajustement du pH, de préférence par ajout d'un acide.

14. Procédé selon l'une quelconque des revendications 11 à 13, **caractérisé en ce qu'**un traitement thermique, de préférence à une température de jusqu'à 160 °C, a lieu après le séchage du produit.

15. Procédé selon l'une quelconque des revendications 11 à 14, **caractérisé en ce que** la mise en contact a lieu par pulvérisation du composé de formule générale (I) ou des polysiloxanes de formule générale (I) contenant des groupes de formule générale (IIa), tels que définis dans la revendication 1, sur les particules d'oxyde métallique à modifier.
